Europäisches Patentamt

European Patent Office

Office européen des brevets

(11) Publication number: 0 351 815
A2

# EUROPEAN PATENT APPLICATION

(21) Application number: 89113236.7

(51) Int. Cl.⁴: G11B 5/66

(22) Date of filing: 19.07.89

(30) Priority: 20.07.88 JP 180701/88
13.09.88 JP 229192/88
26.10.88 JP 270317/88
26.10.88 JP 270318/88
26.10.88 JP 270319/88
26.10.88 JP 270320/88
01.02.89 JP 24676/89
18.05.89 JP 126225/89

(43) Date of publication of application:
24.01.90 Bulletin 90/04

(84) Designated Contracting States:
BE DE FR GB IT NL

(71) Applicant: KANEGAFUCHI KAGAKU KOGYO
KABUSHIKI KAISHA
2-4 Nakanoshima 3-chome
Kita-ku Osaka-shi Osaka 530(JP)

(72) Inventor: Saiki, Koji
Lune-Toyonaka No. 121 6-1, Kitajo-cho
4-chome
Toyonaka-shi(JP)
Inventor: Nasu, Shogo
322-204, 1-ban, Kitaochiai 1-chome
Suma-ku Kobe-shi(JP)
Inventor: Matsumoto, Kenji
4-3, Shirogayama 4-chome Tarumi-ku
Kobe-shi(JP)

(74) Representative: Vossius & Partner
Siebertstrasse 4 P.O. Box 86 07 67
D-8000 München 86(DE)

(54) Perpendicular magnetic recording medium, method for its manufacturing and method for recording and reproducing.

(57) The present invention is to provide a magnetic recording medium which comprises an underlayer magnetic film deposited on a substrate, said underlayer magnetic film composed of at least one alloy selected from Fe, Fe-Co and Fe-Ni alloys and a perpendicular magnetic anisotropic film deposited on said underlayer magnetic film composed of Fe-Co-O or Co-O, a method for manufacturing the medium and a method for recording and reproducing. According to this invention, it is possible to provide a perpendicular magnetic recording medium markedly improved in reproduction output, adhesion to substrate and durability.

FIG. 1

EP 0 351 815 A2

# PERPENDICULAR MAGNETIC RECORDING MEDIUM, METHOD FOR ITS MANUFACTURING AND METHOD FOR RECORDING AND REPRODUCING

The present invention relates to a perpendicular magnetic recording medium capable of high density recording, and more particularly to a perpendicular magnetic recording medium suitable for flexible disks, magnetic tapes and hard disks, manufacturing method thereof, and also recording and reproducing method thereof.

Hitherto, there have been proposed as a perpendicular magnetic recording medium capable of high density magnetic recording a Co-Cr alloy film, a partially oxidized Co film, a partially oxidized Fe-Co alloy film and the like. These partially oxidized film with its high perpendicular magnetic anisotropy is capable of high density recording, is hard because it is composed of metal oxides and also has a high abrasion resistance. Such partially oxidized films can be manufactured by a vacuum evaporation in an oxygen atmosphere or by reactive sputtering in the same atmosphere.

As a magnetic head for recording and reproduction, on the other hand, heads of main pole excitation type and of ring type have been proposed. Unlike the former, the latter is capable of obtaining a high reproduction output even if the perpendicular magnetic film is single layered, hence this method, is considered to be very useful.

There is, however, a problem that the reproduction output is smaller with a system representing a combination of a perpendicular magnetic recording medium comprising a partially oxidized Fe-Co film or partially oxidized Co film than with, for example, a Co-Cr alloy medium. The reduction of the reproducing output is large especially when its perpendicular magnetic anisotropy is further increased to enhance the recording density. That is, while a standardized output close to the level of 100 $\mu$ Vo-p/mm/(m/sec)/turn is attainable if a Co-Cr single layered medium is reproduced by a ferrite head, that of a partially oxidized Fe-Co film is not more than approximately 50 $\mu$ Vo-p/mm/(m/sec)/turn

It is a principal object of the present invention to provide a perpendicular magnetic recording medium markedly improved in the magnitude of reproduction output, and also improved in durability.

Another object of this invention is to provide a method for manufacturing a perpendicular magnetic recording medium improved in reproduction output, in adhesive strength to the substrate and also in durability.

Still another object of this invention is to provide a recording and reproduction method improved in reproduction output as well as improved recording density.

Further objects and advantages of this invention will become apparent to those skilled in the art by the following detailed description of the preferred embodiments

The present inventors have succeeded in completing this invention after extensive and intensive studies by forming at first an underlayer magnetic film on a substrate and further forming a perpendicular magnetic anisotropic film thereon.

The invention is described in detail in connection with the drawings in which

Fig. 1 is a magnetization curve for Fe-Co-O perpendicular magnetic anisotropic film having an Fe-Co underlayer magnetic film.

Fig. 2 is a magnetization curve for Fe-Co-O perpendicular magnetic anisotropic film having an Fe underlayer magnetic film.

Figs. 3, 4, 5 are graphs showing the relationship between the recording density and the reproduction output, respectively.

Firstly, the present invention provides a perpendicular magnetic recording medium which comprises an underlayer magnetic film deposited on a substrate, comprising any one of Fe, Fe-Co and Fe-Ni alloys and a perpendicular magnetic anisotropic film comprising Fe-Co-O or Co-O deposited on said underlayer magnetic film,

secondly, the present invention provides a method for manufacturing a perpendicular magnetic recording medium, characterized in that an underlayer magnetic film comprising any one of Fe, Fe-Co and Fe-Ni alloys is deposited on a substrate and on the underlayer magnetic film a perpendicular magnetic anisotropic film comprising Fe-Co-O or Co-O is deposited, and

thirdly, this invention provides a method for recording and reproducing characterized by the use of a ring head for recording and reproducing made from the aforementioned perpendicular magnetic recording medium.

The magnetic recording media of this invention are manufactured by an evaporation method in its broad sense, and this includes a sputtering method and a vacuum evaporation method. Described below is a manufacturing method by the sputtering method, the high-frequency magnetron sputtering method in

2

particular.

As the substrate used in the present invention, there may be included a plate, sheet or film of an organic high polymer compound such as polyester and polyimide, metal plates such as aluminum and stainless steel, glass plate or the like, having a thickness of from 50 $\mu$m to several millimeters.

As the underlayer magnetic film used in the present invention, it may be selected from Fe, Fe-Co alloys and Fe-Ni alloys. As to the Fe-Co alloys, those containing 1 to 80 atomic percent, preferably 30 to 60 atomic percent of Co are preferred. If its content should exceed 80 atomic percent, it is likely to result in lowering of the degree of saturation magnetization. The underlayer magnetic film of Fe-Co alloy of this invention can be suitably obtained under sputtering conditions of -30 to 200°C in substrate temperature, 1 to 10 mTorr in argon pressure and 100 to 2000Å/min in deposition rate. The Fe-Co alloy film obtainable under such conditions has a body-centered cubic lattice crystallographically, its saturated magnetization being not less than 1,500 emu/cm$^3$, its coercive force as measured parallel to the film surface is preferably in the range of 5 to 300 Oe, more preferably in the range of 50 to 250 Oe. The coercive force is controllable through adjustment of argon gas pressure at the time of sputtering as well as adjustment of Co content. The coercive force reaches the maximum when Co content is in a vicinity of 60 atomic percent and the minimum when its content is 1 or 80 atomic percent. As to the argon gas pressure, the coercive force gets progressively larger with decreasing argon gas pressure. As far as the film strength is concerned, the lower the argon gas pressure is, the stronger the film becomes, but if it is too low, it may interfere with discharging stability. The substrate temperature is determined by its heat resistance, and the economical usefulness of using a heater or a cooler. The Fe-Co film exhibits an excellent adhesiveness to a polyimide substrate.

As the Fe-Ni alloy underlayer magnetic film, preferred are those containing Ni up to 20 atomic percent. Favorable results are attainable under sputtering conditions of -30 to 200°C in substrate temperature, 1 to 10 mTorr in argon gas pressure and 100 to 2000Å/min in deposition rate. The Fe-Ni alloy film obtained under these conditions is in the structure of body-centered cubic lattice crystallographically, has a very high degree of saturation magnetization of approximately 1700 emu/cm$^3$, its magnetic anisotropy is parallel to the film surface and the coercive force measured parallel to the film surface is 5 to 150 Oe. If Ni content should exceed 20 atomic percent, the saturation magnetization tends to decrease rapidly.

The existence of the underlayer magnetic film is effective in increasing reproduction output, recording density and also recording sensitivity. As its effect is exhibited, the thickness of the underlayer magnetic film and its coercive force are of particular importance. That is, the reproduction output increases with increasing thickness of the underlayer film magnetic, and with it also increased is the recording density $D_{50}$. $D_{50}$ indicates the recording density at which it comes equal to 1/2 of the maximum output in the area of low reproduction output. When the thickness exceeds 500Å, however, the increase of reproduction output is slackened and when it is in excess of 1000Å, the recording density tends to start lowering instead. Hence, the preferred range is from 50 to 1000Å. As to the coercive force, $D_{50}$ is favorable when the coercive force is low, but an increase of the reproduction output become small. When the coercive force is increased to the range of 200 to 300 Oe, $D_{50}$ is slightly lowered but this is more than offset by the increase in reproduction output. When the coercive force is increased beyond 300 Oe, $D_{50}$ decreases with simultaneous decrease of the recording sensitivity.

Next, explanation will be made about a method of manufacturing Fe-Co-O perpendicular magnetic anisotropic film as one of the perpendicular magnetic anisotropic films. The Fe-Co-O perpendicular magnetic anisotropic film can be manufactured favorably under conditions of -30 to 200°C in substrate temperature, 1 to 10 mTorr and 100 to 10000 Å/min in deposition rate. The substrate temperature is determined by its heat resistance and economical usefulness of using a heater or a cooler. As to the argon gas pressure, the lower it is, the higher is the perpendicular anisotropy and a film of higher strength is obtainable, but if it is too low, discharging tends to be unstable. As to the deposition rate, it is desirable to be higher from an economical viewpoint, but the upper limit is inevitably set by the current technical level with regard to equipments, devices et cetera in the world concerned.

The magnetic properties of the Fe-Co partially oxidized film, especially its saturation magnetization, perpendicular magnetic anisotropy and coercive force are all determined mainly by the content of Co and oxygen. As to Co content, high perpendicular magnetic anisotropy are obtainable when Co content is 30 to 70 atomic percent [Co/(Co + Fe)]. The maximum perpendicular magnetic anisotropy is obtained when the aforementioned percentage is approximately 40 atomic percent, and, this taken into consideration, the highest saturation magnetization as well as coercive force is obtainable. When a underlayer magnetic film comprising Fe-Co is used, it is then preferable that the sputtering target may be shared if the composition of the aforementioned underlayer magnetic film is identical with that of Fe-Co contained in the iron-cobalt partially oxidized film (Fe-Co-O). The oxidation ratio is known to play an important role in determining

3

magnetization. Its preferred content may be in the range of 50 to 85 %. The oxidization ratio is a factor for saturation magnetization, perpendicular magnetic anisotropy and coercive force. If the oxidization ratio should be raised, the saturation magnetization falls along a straight line, and inversely, the perpendicular magnetic anisotropy increases. The coercive force shows a tendency similar to that of perpendicular magnetic anisotropy. With the media of the present invention, reproduction output is in proportion to the saturation magnetization and the recording density $D_{50}$ is in proportion to the perpendicular magnetic anisotropy, it is necessary to increase sizably both saturation magnetization and perpendicular magnetic anisotropy in order to attain both high reproduction output and high recording density, hence the result is that the oxidation ratio has the optimum level. If the coercive force is too small, it is likely to be subject to demagnetization of recorded information, while, if it is too large, it is likely to become difficult to write and the overwrite properties are adversely affected. For this reason, too, it is important that both coercive force and perpendicular magnetic anisotropy have to be optimized with the type of the head used. The oxidization ratio is controllable through adjustment of the amount of oxygen during sputtering or of the oxygen partial pressure. Through control of both cobalt and oxygen contents, a magnetic film is obtainable, whose saturation magnetization Ms is preferably 300 to 950 emu/cm$^3$, more preferably 500 to 900 emu/cm$^3$, whose perpendicular anisotropic magnetic field Hk is preferably 3 to 9 kOe, and whose perpendicular coercive force is preferably 200 to 1000 Oe. The thickness of Fe-Co-O perpendicular magnetic anisotropic film is also an important factor, being decisive for the film's recording-reproduction properties and its value, depending upon the type of the head used, is preferably 500 to 6000Å, more preferably 700 to 3000 Å, and most preferably 1500 to 2000 Å. If the film thickness is outside the aforesaid range either on the higher or the lower side, both reproduction output voltage and recording density are bound to get lower.

Another type of the perpendicular magnetic isotropic film, partially oxidized cobalt film, too, can be manufactured in a way similar to the manufacture of the aforementioned partially oxidized iron-cobalt film, whose saturation magnetization is preferably 400 to 900 emu/cm$^3$, whose perpendicular anisotropy is preferably 3 to 7 kOe, and whose coercive force is preferably 200 to 1000 Oe.

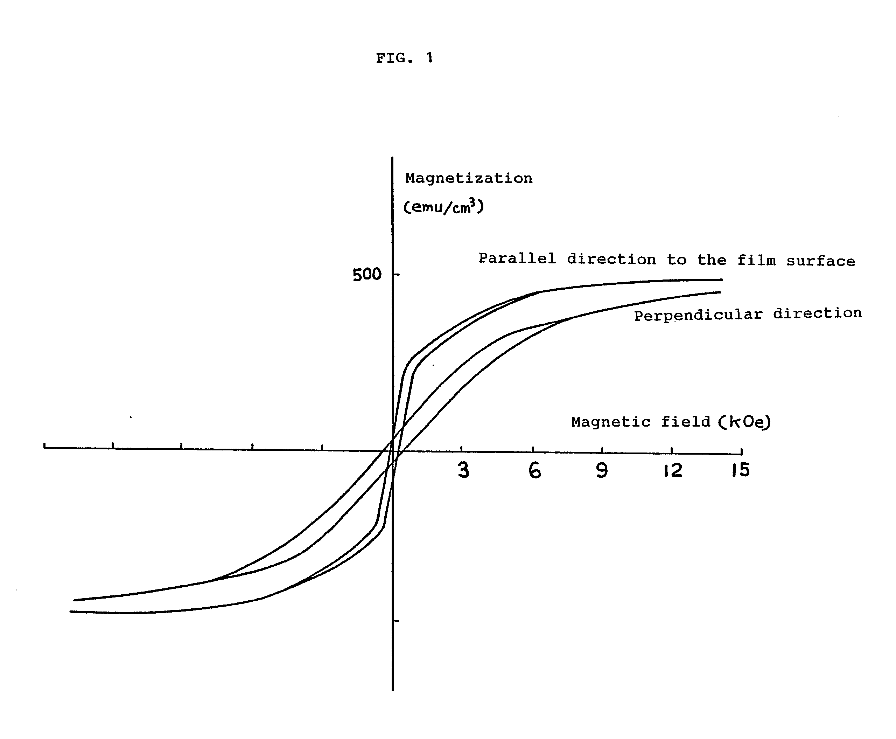

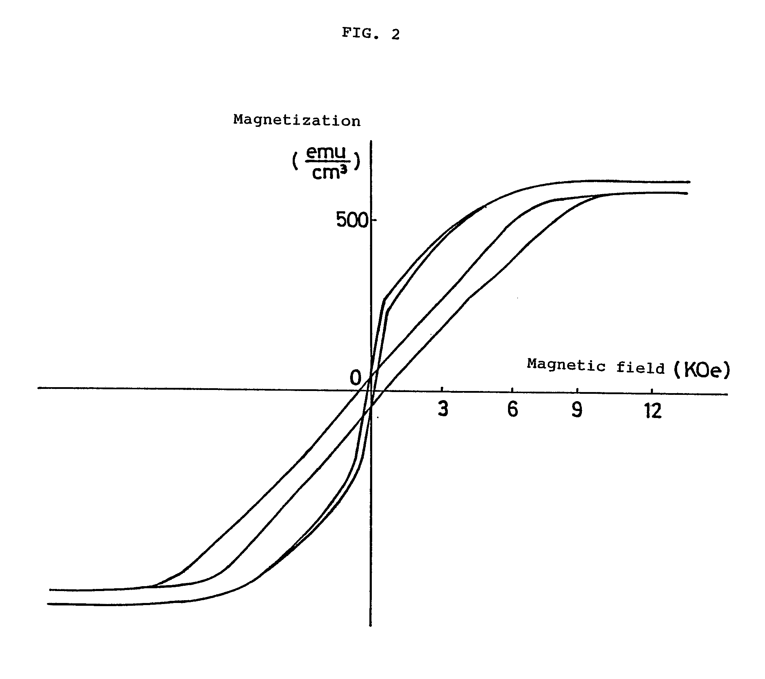

Fig. 1 is a graph showing an example of the magnetization curve of a perpendicular magnetic recording medium Fe (40) - Co (60) - 0 (Figures in parentheses mean atomic percentage, hereinafter the same.) comprising as the underlayer magnetic film an Fe (40) - Co (60) alloy film whose thickness is 500 Å (medium described later in Example 3), while Fig. 2 is another graph showing an example of the magnetization curve of a perpendicular magnetic recording medium Fe (40)-Co (60) - O (medium described later in Example 27) comprising as the underlayer magnetic film an Fe film whose thickness is 500 Å. As seen from the above-mentioned curves, there exists an magnetic underlayer having an anisotropy parallel to the film, surface and on it a layer with a large perpendicular magnetic anisotropy is formed.

The two-layer medium of the present invention is hard as the surface layer is formed of a partially oxidized substance, thus being low in friction coefficient and improved in durability when the head is slid. However, it is advisable to do coating with a proper lubricant within an extent not to cause an increase of spacing, for it is effective for improving the running performance of the head and its durability.

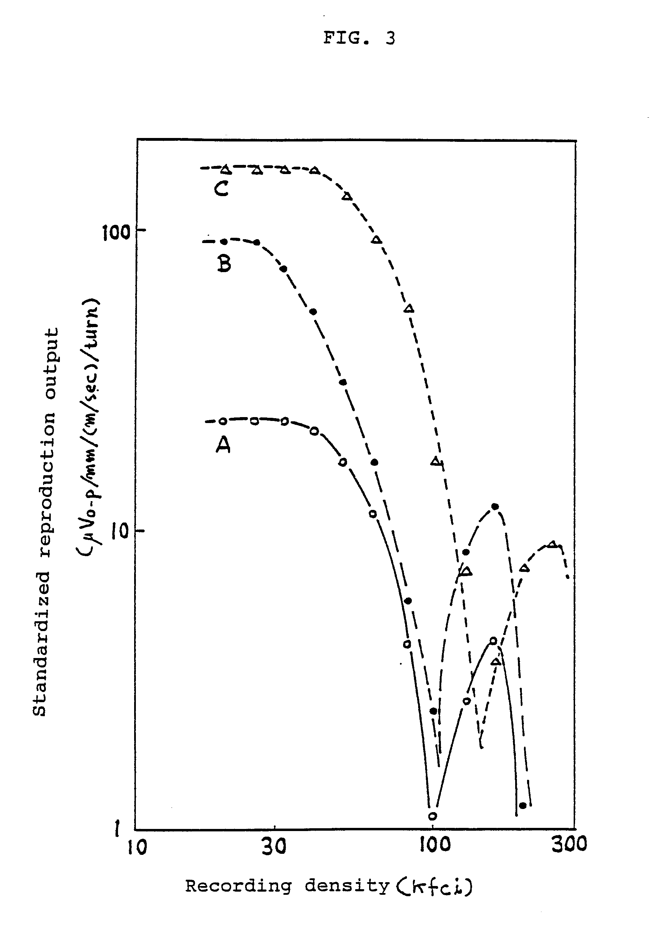

Recording and reproduction may be done preferably with a ring-type head. Even when a perpendicular head of the main magnet pole excitation type is used, the two-layer medium of the present invention is effective, indeed, for improving the reproduction output, but it is sometimes the case that its absolute value is not always sufficient, and a particularly high reproduction output and high recording density are attainable when the ring-type head is used. As the core materials for the ring head are usable, among others, Zn-Mn ferrite, and also usable is the Zn-Mn ferrite with a high-saturation magnetic flux density such as amorphous compound or sendust and highly magnetopermeable materials inserted Zn-Mn ferrite but among these, particularly suitable is a head high in saturation magnetic flux density e.g. those with a magnetic force of, for instance, 4500 Gauss is well suited. Fig. 3 shows the curves of recording density of reproduction output in the digital recording. On the abscissa of the graph the number of the recorded bits per inch (fci = flux changes per inch) are given, and on the ordinate are given, on the other hand, what reproduction output voltage (Vo-p) of deposit was divided by the head's running speed (m/sec), number of turns of the coil (turn) and head track's width (mm), the so-called standardized reproduction output.

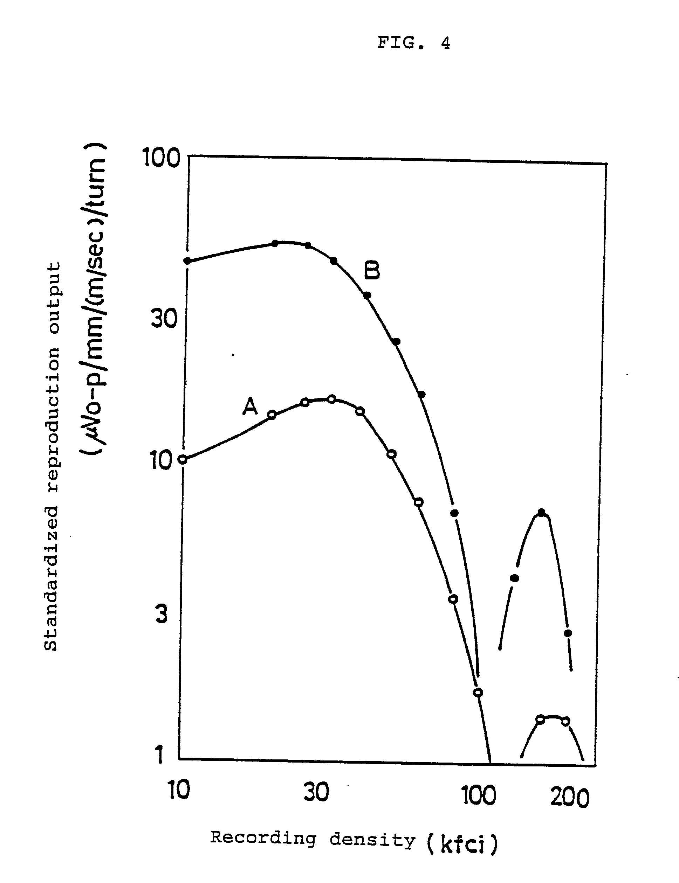

Curve A (Comparative Example 1 described later) shows the case where the Fe-Co underlayer magnetic film is nonexistent, Curve B (Example 3 described later) shows the case where the Fe-Co underlayer magnetic film is formed to a thickness of approximately 500Å, both measured by the use of a ring head of Mn-Zn ferrite with a gap length of approximately 0.3 μm. Curve C (Example 3 described later) shows the case where the same Fe-Co film is existent, measured by the use of a MIG (metal in gap) type of head (commonly called "head for 8 mm VTR"). Each curve has an output volley at 100 kfci or 140 kfci, and this is a phenomenon called "gap length loss." It is then understandable that the reproduction output comes to be extremely increased when Fe-Co alloy underlayer magnetic film is provided. If a metal head is used the reproduction output comes to be still higher. If the head with a small gap length is used, the recording density $D_{50}$ becomes higher accordingly. Fig. 4 shows the effect exhibited by Fe underlayer magnetic film. Curve A (Comparative Example 3 described later) represents the case where the underlayer magnetic film is nonexistent, Curve B (Example 27 described later) represents the case where Fe underlayer magnetic film (500Å thick) is existent. As a head, was used an Mn-Zn ferrite ring head approximately 0,35 $\mu$m in gap length. The existence of the Fe underlayer magnetic film results in improvement of reproduction output.

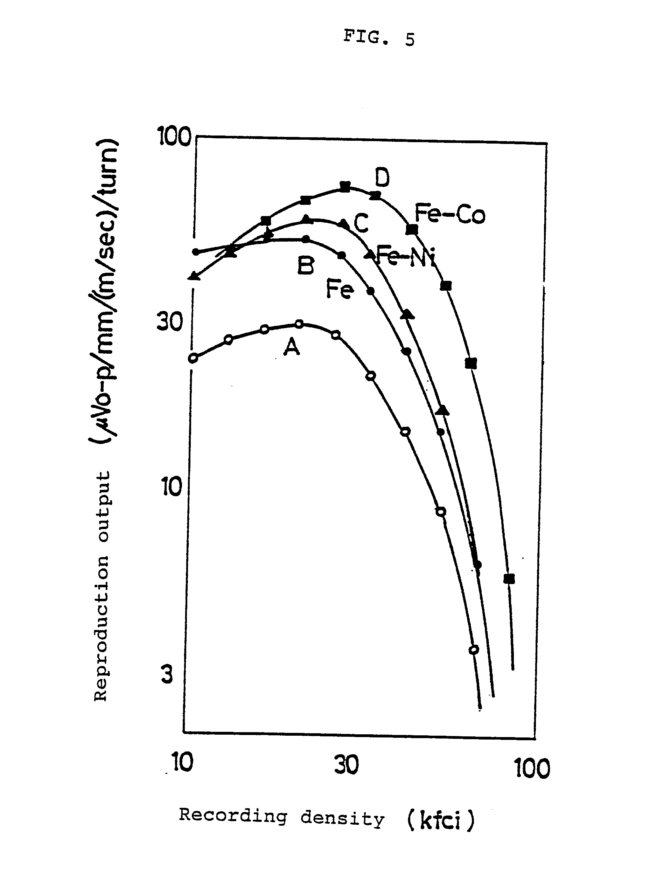

Fig. 5 relates to a Co-O perpendicular magnetic anisotropic film, showing the effect of Fe, Fe-Ni and Fe-Co underlayer magnetic films. Curve A (Comparative Example 5 described later) represents the case where there is no underlayer magnetic film, Curve B (Example 45 described later) represents the case where the underlayer magnetic film is Fe, Curve C (Example 48 described later) represents the case where the underlayer magnetic film is an Fe-Ni alloy and Curve D (Example 51 described later) represents the case where the underlayer magnetic films are Fe-Co alloy. In all these cases the head used is the same as in the case of Fig. 4. As to Co-O media as well, it is well understood that the Fe, Fe-Ni and Fe-Co underlayer magnetic films are all effective. The existence of the underlayer magnetic films of Fe, Fe-Ni and Fe-Co alloys is also effective in improving both recording sensitivity and overwrite property. The present invention naturally includes such other media as Fe, Fe-Ni alloy, Fe-Co alloy underlayer magnetic films and/or perpendicular magnetic anisotropic films Fe-Co-O or Co-O containing such third elements as Ni, Cr, Al, Nb, Mn, Ta, W, Mo, Zr, Ti, V and Si, and such other media as having included Fe-Co-O or Co-O film between the underlayer magnetic film and the perpendicular magnetic anisotropic film, and having the oxygen content higher toward the surface.

Hereinafter the present invention will be explained in more detail by way of examples and comparative examples that follow, but it is to be understood that this invention is in no way limited thereby.

Examples 1-5

An underlayer magnetic film was formed on a 50 $\mu$m thick polyimide film by the high frequency magnetron sputtering method. The polyimide film was properly tensioned and then stuck to a substrate holder. As target an Fe-Co alloy (atomic· ratio 40:60), 6 inches in diameter was used, according to the sputter-up system. From the degree of vacuum attainable, $7 \times 10^{-7}$ Torr, it was adjusted to 3 mTorr through introduction of argon gas and the deposited thickness was changed to between 100 and 1000 Å by changing the sputtering time at 1,000 W. The substrate holder was water-cooled.

Then, keeping the above-mentioned vacuum, Fe-Co-O perpendicular magnetic anisotropic film was deposited. The necessary quantity of oxygen gas was then introduced together with argon gas and total pressure was adjusted to 3 mTorr. Deposition was continued for 1 minute 40 seconds at a sputtering power of 900 W. The substrate holder was likewise water-cooled. On the back side of the substrate, Fe-Co underlayer magnetic film and Fe-Co-O perpendicular magnetic anisotropic film were deposited in the same manner.

From the resulting sheet a flexible disc, 5 inches in diameter was cut out and its recording and reproduction properties were measured. As the head was used a Mn-Zn ferrite head of the ring type (saturation magnetic flux density $B_{10}$ approximately 4,500 Gauss). The effective gap length is approximately 0.4 micron, track width 35 microns, coil winding 20 turns, head running speed 2 m per second. The recording frequency was changed and magnitude of the reproduction output was determined, and the standardized reproduction output V at 25.4 kfci as well as recording density $D_{50}$ were measured. The results were as shown in Table 1.

The magnetic property of the Fe-Co underlayer magnetic film was determined with a similar film having deposited thereon the underlayer magnetic film alone by the same sputtering conditions.

Comparative Example 1

Without depositing the Fe-Co underlayer magnetic film, a Fe-Co-O perpendicular magnetic anisotropic film was formed directly on a polyimide film in the same manner as described above in Example 1, and its recording and reproducing properties were measured. The results are shown in Table 1.

Comparative Example 2

On a polyimide film, a permalloy film containing 5 atomic percent of Cu and 4 atomic percent of Mo was deposited as an underlayer magnetic film by sputtering instead of the Fe-Co film. It was done at argon gas pressure of 3 mTorr, sputtering power of 200W, with the substrate holder water-cooled and depositing was continued for 4 minutes. Then, by the same manner as described in Example 1, an Fe-Co-O perpendicular magnetic anisotropic film was formed thereon. The results of its recording and reproducing properties measured are tabulated in Table 1.

Examples 6-12

In the same manner as Example 3, an Fe-Co underlayer magnetic film was deposited to the thickness of 500 Å and further a perpendicular magnetic anisotropic film was deposited to a thickness of 500 to 6000Å with the sputtering time being adjusted properly.

The flexible disk thus obtained, the recording and reproducing properties thereof were measured in the same manner as described in Example 1, and the results were as shown in Table 2. From Table 2, it is apparent that the reproduction output and the recording density are both highest when the thickness of the perpendicular magnetic anisotropic film is in a range of 1,500-2,000Å.

Examples 13-17

In the same manner as described above in Example 1 except that the sputtering power was set at 200 W, an Fe-Co underlayer magnetic film was deposited to the thickness of 500Å and then through changing the oxygen introducing rate, a perpendicular magnetic anisotropic film was deposited to the thickness of 1,500 Å. The recording and reproducing property was measured in the same manner as Example 1 except that a head with 0.35 $\mu$m in effective gap length and 30$\mu$m in track width (so-called S-VHS VTR, saturated magnetic flux $B_{10}$ = 5,000 Gauss) was used, and the results were as shown in Table 3. It is seen from Table 3 that the reproduction output and recording density are both high especially when the saturation magnetization is in the range of 500 to 900 emu/cm$^3$.

Examples 18-20

Evaluation of the recording and reproducing properties of the perpendicular magnetic anisotropic medium was carried out with three kinds of commercially available heads for video tape recorder, namely VTR head, VTR head of S-VHS type and 8mm VTR head, and their results were as shown in Table 4.

In the table $NI_{50}$ is the recording current expressed in ampere turn unit necessary for reproduction output to reach half the maximum value, when recording was done under the conditions of 1MHz in recording frequency, 2 m/sec in running speed and the recording current being varied.

From Table 4, it is understandable that the higher the head core's saturation magnetic flux density, the better the recording density properties.

Example 21

Two-layer film medium was prepared under the same sputtering conditions as described in Example 15 except that argon gas pressure was set at 20 mTorr. The ring head used was the same as used in Example 15. Besides the density properties, C/N ratio at recording density of 25.4 kfci, noise level and overwrite C/N ratio were measured at spectrum analyzer's resolution band width of 30 kHz. The noise level was measured against device's noise when the head was detached from the media. In determining the overwrite C/N ratio, recording was first made of 2F = 40 kfci and then a signal of 1F = 20 kfci was overwritten and the attenuation of the 40 kfci was displayed in unit of dB. The results were as shown in Table 5.

Example 22

A medium was prepared by the same manner as in Example 21 except that the sputtering conditions for forming Fe-Co underlayer magnetic film were 1.0 mTorr in argon gas pressure, 1,200 W in power and 25 seconds in sputtering time, and further except that in preparing perpendicular magnetic anisotropic film, as the target Fe-Co alloy with a Co content of 40 atomic percent was used, and its recording and reproducing properties were examined. The results were as shown in Table 5.

Example 23

A medium was prepared by the same manner as in Example 21 except that in forming an Fe-Co underlayer magnetic film an alloy containing 10 atomic percent of Co was used as the target, the argon gas pressure being adjusted to 1.2 mTorr, and further except that in preparing perpendicular magnetic anisotropic film, as the target Fe-Co alloy with a Co content of 40 atomic percent was used, and its recording and reproducing properties were examined. The results were also as shown in Table 5.

Example 24

A medium was prepared by the same manner as in Example 21 except that the sputtering conditions for forming Fe-Co underlayer magnetic film were 1.2 mTorr in argon gas pressure, as the target was used an alloy with a Co content of 40 atomic percent, and further except that in preparing a perpendicular magnetic anisotropic film, as the target Fe-Co alloy with a Co content of 40 atomic percent was used, and its recording and reproducing properties were examined. The results were also as shown in Table 5.

The data of Table 5 show that the coercive force of the underlayer magnetic film is controllable through adjustment of Fe-Co alloy's composition and argon gas pressure during sputtering. The higher the underlayer magnetic film's Hc, the higher the reproduction output. As to $D_{50}$, the value tends to be larger as the Hc values of both layers are smaller, but its effect is relatively slight and, as far as C/N ratio, noise, overwrite C/N are concerned, it is more advantageous to increase Hc values of both layers.

Example 25

A medium was prepared under the same conditions as in example 21 except that for preparation of Fe-Co underlayer magnetic film by sputtering, an alloy containing 60 atomic percent of Co was used as the target, and its recording and reproducing properties were examined and the results were also as shown in Table 5.

Examples 26 - 33

Two-layer media with their underlayer magnetic films composed of Fe and their perpendicular magnetic anisotropic films composed of Fe-Co-O (Fe:Co = 4:6, in atomic ratio) were prepared. The Fe underlayer magnetic film was prepared under the conditions of 3 mTorr in argon gas pressure and 200 W in sputtering power, and the film thickness was varied by changing the sputtering time. Other conditions such as the substrate used were identical as in Example 1.

Then, without breaking vacuum, a Fe-Co-O perpendicular magnetic anisotropic film was deposited. These conditions were the same as in Example 1 except that oxygen introduction rate was slightly altered. The sputtering time was varied to change the thickness of the film formed. The two-layer film was formed by depositing on the back side, too, in exactly the same manner.

From the sheet so obtained, flexible discs, 5.25 inches in diameter were cut out, and the recording and reproducing properties were examined and the results were also as shown in Table 6.

Comparative Example 3

A medium was prepared in the same manner as described above in Example 26 except that the Fe underlayer magnetic film was not formed, and its recording and reproducing properties examined and the results were also as shown in Table 6.

From the data of Table 6, it is understandable that the Fe underlying magnetic film, too, contributes to improvement of the recording and reproducing properties. The optimum thickness of the underlayer magnetic film is 500 Å, while that of perpendicular magnetic anisotropic film ranges from 1000 Å to 2000 Å.

Examples 34 - 44

Two-layer media composed of an Fe-Ni alloy underlayer magnetic film and an Fe-Co-O perpendicular magnetic anisotropic film were prepared. Manufacturing conditions of Fe-Ni underlayer magnetic film were 3 mTorr in argon gas pressure and 200 W in sputtering power with an Fe-Ni alloy of a different Ni concentration as the target. The sputtering time was varied to change the film thickness. Other conditions such as the substrate were identical with those in Example 1.

Thereafter, without breaking vacuum, an Fe-Co-O magnetic anisotropic film was formed by depositing. The sputtering conditions were the same as those of Example 26. The sputtering time was varied to change the film thickness. The two-layer film was formed by depositing on the back side, too, in exactly the same manner.

From the sheet so obtained, flexible discs, 5.25 inches diameter were cut out and with them recording and reproducing properties were examined in the same way as in Example 1. The results were as shown in Table 7.

Comparative Example 4

A medium was prepared in the same manner as described in Example 34 except that the Fe-Ni underlayer magnetic film was not formed, and its recording and reproducing properties were examined. The results were as shown in Table 7.

From the data of Table 7, it is apparent that the Ni concentration of the Fe-Ni alloy underlayer magnetic film is preferably not more than 20 atomic percent. It is also apparent that the preferred thickness of the Fe-Ni underlayer magnetic film is 500Å and that of the perpendicular magnetic an isotropic film is in a range of 1, 000 to 2,000 Å.

Examples 45-53

Two-layer media composed of an Fe, Fe-Ni (9:1 in atomic ratio) or Fe-Co (4:6 in atomic ratio) as the underlayer magnetic film and a perpendicular magnetic anisotropic film as the perpendicular magnetic anisotropic film were prepared. The manufacturing conditions for the underlayer magnetic film were 3 mTorr in argon gas pressure and 200 W in sputtering power. The sputtering time was varied to change the film thickness. Other conditions such as the substrate were the same as mentioned above in Example 1.

Then, without breaking vacuum, the Co-O perpendicular magnetic anisotropic film was formed by depositing. The necessary quantities of oxygen and argon gas were introduced to adjust the total pressure to 3 mTorr. Then deposition was continued for 65 seconds at the sputtering power of 700 W and a medium of 1,500 Å in thickness of perpendicular magnetic anisotropic film was obtained. A two-layer film was formed on the back side, too, in exactly the same manner.

Flexible discs, 5.25 inches in diameter were cut out of the sheet thus obtained and with these the recording and reproducing properties were examined. The results were as shown in Table 8.

Comparative Example 5

A medium was prepared in the same manner as described in Example 4, except that formation of the underlayer magnetic film was not formed, and its recording and reproducing properties were examined. The results were as shown in Table 8.

From the data of Table 8, it is seen that even when the perpendicular magnetic anisotropic film is Co-O, approximately the same effect is noticeable.

The reason why the reproduction output is increased by the presence of an underlayer magnetic film is not yet clear, but it is presumable: (1) As the result of the decrease of the demagnetization field due to formation of the so-called horseshoe-shaped magnetization mode by the presence of the underlayer magnetic film having in-plane anisotropy, the surface leakage magnetic field intensity is increased, (2) The underlayer itself serves as a recording layer, (3) The presence of underlayer magnetic film makes it less vulnerable to the adverse effect by the water content of the film than in the case of forming Fe-Co-O or Co-O perpendicular magnetic anisotropic films directly on a high polymer film, this resulting in an improved magnetic property, that is, a film with a high perpendicular magnetic anisotropy is obtainable. Anyway, the magnetic flux leaking from the surface of the magnetically recorded media becomes larger and observed as a large reproduction output. Also, by the formation of horseshoe-shaped magnetization mode, the perpendicular magnetic anisotropic film is magnetized perpendicularly easier and the recording density $D_{50}$, too, is increased.

As described above, in a perpendicular magnetic recording media composed of an Fe-Co-O or Co-O perpendicular magnetic anisotropic film, media markedly improved in the reproduction output, adhesiveness to the substrate, and in durability can be provided by the formation of an underlayer magnetic film of an Fe, Fe-Ni or Fe-Co on a substrate.

Table 1

| | Manufacturing conditions of underlayer magnetic film | | | | | Manufacturing conditions of perpendicular magnetic anisotropic film | | | | Magnetic properties | | | Recording and Reproducing properties | |
|---|---|---|---|---|---|---|---|---|---|---|---|---|---|---|
| | Co/(Fe+Co) (atomic ratio) | Sputtering | | $H_c$ (Oe) | Thickness (Å) | Co/(Fe+Co) (atomic ratio) | Sputtering | | Thickness (Å) | $M_s$ emu ($\frac{}{cm^3}$) | $H_k$ (kOe) | $H_{c\perp}$ (Oe) | $D_{50}$ (kfci) | V at 25kfci ($\mu$ Vo-p/mm/(m/sec)/turn) |
| | | Power (W) | Time (sec) | | | | Power (W) | Time (Min, Sec) | | | | | | |
| Comp.Ex. 1 | —— | —— | —— | —— | —— | 0.6 | 900 | 1min 40sec | 2750 | 490 | 7.1 | 550 | 63 | 23 |
| Example 1 | 0.6 | 1000 | 7 | 65 | 100 | " | " | " | " | 490 | 7.2 | 440 | 39 | 44 |
| " 2 | " | " | 15 | 70 | 250 | " | " | " | " | 540 | 7.3 | 340 | 35 | 79 |
| " 3 | " | " | 30 | 90 | 500 | " | " | " | " | 500 | 8.6 | 530 | 44 | 93 |
| " " | " | " | " | " | " | " | " | " | " | " | " | " | 72 * | 157 * |
| " 4 | " | " | 45 | 120 | 750 | " | " | " | " | 610 | 8.0 | 590 | 38 | 86 |
| " 5 | " | " | 60 | 120 | 1000 | " | " | " | " | 580 | 8.0 | 520 | 38 | 93 |
| Comp.Ex. 2 | Cu-Mo permalloy | 200 | 4 min | 5 | 500 | " | " | " | " | 390 | 9.8 | 280 | 51 | 47 |

*Measured by a metal head

EP 0 351 815 A2

Table 2

| | | Manufacturing conditions of underlayer magnetic film | | | | | Manufacturing conditions of perpendic- ular magnetic anisotropic film | | | | Magnetic properties | | | Recording and Reproducing properties | |
| | | Co/(Fe+Co) (atomic ratio) | Sputtering | | $H_c$ (Oe) | Thickness (Å) | Co/(Fe+Co) (atomic ratio) | Sputtering | | Thickness (Å) | Ms emu $\left(\dfrac{}{cm^3}\right)$ | $H_k$ (kOe) | $H_{c\perp}$ (Oe) | $D_{50}$ (kfci) | V at 25kfci $[\mu V_{o-p}$ /mm/ (m/sec) /turn ] |
| | | | Power (W) | Time (sec) | | | | Power (W) | Time (sec) | | | | | | |
| Example | 6 | 0.6 | 1000 | 30 | 90 | 500 | 0.6 | 900 | 18 | 500 | 540 | 5.8 | 410 | 35 | 42.6 |
| " | 7 | " | " | " | " | " | " | " | 36 | 1000 | " | " | " | 57 | 91 |
| " | 8 | " | " | " | " | " | " | " | 55 | 1500 | " | " | " | 57 | 120 |
| " | 9 | " | " | " | " | " | " | " | 72 | 2000 | " | " | " | 57 | 109 |
| " | 10 | " | " | " | " | " | " | " | 126 | 3500 | " | " | " | 41 | 91 |
| " | 11 | " | " | " | " | " | " | " | 180 | 5000 | " | " | " | 39 | 70 |
| " | 12 | " | " | " | " | " | " | " | 216 | 6000 | " | " | " | 39 | 50 |

EP 0 351 815 A2

Table 3

| | Co/(Fe+Co) (atomic ratio) | Manufacturing conditions of underlayer magnetic film | | Hc (Oe) | Thickness (Å) | Manufacturing conditions of perpendicular magnetic anisotropic film | | | | Magnetic properties | | | Recording and Reproducing properties | | |
| | | Sputtering | | | | Sputtering | | Oxygen pressure (mTorr) | Thickness (Å) | Ms emu/cm³ | Hk (kOe) | Hc⊥ (Oe) | D₅₀ (kfci) | V at25kfci [μVo-p/mm/(m/sec)/turn] | V at160kfci |
| | | Power (W) | Time (sec) | | | Power (W) | Time (sec) | | | | | | | | |
| Example 13 | 0.6 | 200 | 160 | 170 | 500 | 900 | 54 | 2.0 | 1500 | 350 | 6.0 | 350 | 35 | 53 | 2 |
| " 14 | " | " | " | " | " | " | " | 1.8 | " | 550 | 5.8 | 530 | 75 | 108 | 8 |
| " 15 | " | " | " | " | " | " | " | 1.5 | " | 630 | 5.2 | 410 | 81 | 138 | 13 |
| " 16 | " | " | " | " | " | " | " | 1.0 | " | 800 | 4.2 | 230 | 85 | 175 | 46 |
| " 17 | " | " | " | " | " | " | " | 0.7 | " | 930 | 2.5 | 260 | 34 | 120 | —— |

EP 0 351 815 A2

Table 4

| Example | Head | | | | | Recording an reproducing properties | | |
|---|---|---|---|---|---|---|---|---|
| | Kind | Saturation magnetic flux density (G) | Gap length ($\mu$m) | Track width ($\mu$m) | Coil winding number (Turn) | $NI_{50}$ at25.4kfci (Ampere.Turn) | $D_{50}$ (kfci) | $V_0$ at25.4kfci [$\mu V_{O-P}$ /mm)/(m/sec)/ turn] |
| 18 | VTR | 4500 | 0.35 | 35 | 20 | 0.056 | 59 | 71 |
| 19 | S-VHS VTR | 5000 | 0.30 | 30 | 20 | 0.032 | 75 | 108 |
| 20 | 8mm VTR | 11000 | 0.25 | 25 | 20 | 0.024 | 105 | 75 |

EP 0 351 815 A2

13

Table 5

| | | Manufacturing conditions of underlayer magnetic film | | | | Manufacturing conditions of perpendicular magnetic anisotropic film | | | | Magnetic properties | | | | | Recording and Reproducing properties | | | | |
|---|---|---|---|---|---|---|---|---|---|---|---|---|---|---|---|---|---|---|---|
| | Co/(Fe+Co) (atomic ratio) | Sputtering | | | Thickness ($\AA$) | Co/(Fe+Co) (atomic ratio) | Sputtering | | Thickness ($\AA$) | Underlayer magnetic film | Perpendicular magnetic anisotropic film | | | $D_{s0}$ (kfci) | 25.4 kfci | | | O/W (2F→1F) 2F=40kfci dB |
| | | Argon pressure (mTorr) | Power (W) | Time (sec) | | | Power (W) | Time (sec) | | $H_c$ (Oe) | $M_s$ ($\frac{emu}{cm^3}$) | $H_k$ (kOe) | $H_{cl}$ (Oe) | | V $\frac{\mu Vo-p}{m \cdot m/s \cdot turn}$ | C/N dB | Noise dB | |
| Ex. 21 | 0.6 | 20 | 200 | 160 | 500 | 0.6 | 900 | 54 | 1500 | 50 | 600 | 5.4 | 450 | 85 | 130 | 38 | 9.1 | 20 |
| " 22 | " | 1.0 | 1200 | 25 | " | 0.4 | " | " | " | 250 | 720 | 4.2 | 300 | 82 | 166 | 41 | 12.0 | 28 |
| " 23 | 0.1 | 1.2 | 200 | 160 | " | 0.4 | " | " | " | 20 | 620 | 6.6 | 820 | 80 | 50 | 33 | 8.2 | 15 |
| " 24 | 0.4 | 1.2 | 200 | " | " | 0.4 | " | " | " | 185 | 740 | 4.5 | 420 | 76 | 162 | 43 | 10.0 | 22 |
| " 25 | 0.6 | 1.2 | 200 | " | " | 0.6 | " | " | " | 360 | 560 | 4.5 | 350 | 64 | 113 | 41 | 9.0 | 24 |

14

Table 6

| | Manufacturing conditions of underlayer magnetic film | | | | Manufacturing conditions of perpendicular magnetic anisotropic film | | | | Magnetic properties | | | Recording and Reproducing properties | |
|---|---|---|---|---|---|---|---|---|---|---|---|---|---|
| | Sputtering | | $H_c$ (Oe) | Thickness (Å) | $\dfrac{Co}{Co+Fe}$ (atomic ratio) | Sputtering | | Thickness (Å) | $M s$ $\left(\dfrac{emu}{cm^3}\right)$ | $H_k$ (kOe) | $H_{c\perp}$ (Oe) | $D_{50}$ (kfci) | V at 25kfci [ $\mu$ Vo-p/mm/(m/sec) /turn ] |
| | Power (W) | Time (sec) | | | | Power (W) | Time (sec) | | | | | | |
| Comp.Ex. 3 | —— | —— | —— | —— | 0.6 | 900 | 55 | 1500 | 620 | 5.0 | 530 | 60 | 16 |
| Example 26 | 200 | 40 | 7 | 200 | " | " | " | " | " | " | " | 53 | 51 |
| " 27 | " | 110 | 10 | 500 | " | " | " | " | " | " | " | 51 | 55 |
| " 28 | " | 220 | 10 | 1000 | " | " | " | " | " | " | " | 40 | 55 |
| " 29 | " | 110 | 10 | 500 | " | " | 20 | 500 | " | " | " | 40 | 38 |
| " 30 | " | " | " | " | " | " | 40 | 1000 | " | " | " | 50 | 53 |
| " 31 | " | " | " | " | " | " | 80 | 2000 | " | " | " | 49 | 53 |
| " 32 | " | " | " | " | " | " | 120 | 3000 | " | " | " | 44 | 49 |
| " 33 | " | " | " | " | " | " | 240 | 6000 | " | " | " | 34 | 43 |

EP 0 351 815 A2

EP 0 351 815 A2

Table 7

| | Manufacturing conditions of underlayer magnetic film | | | | | Manufacturing conditions of perpendicular magnetic anisotropic film | | | | Magnetic properties | | | Recording and Reproducing properties | |
|---|---|---|---|---|---|---|---|---|---|---|---|---|---|---|
| | $\frac{Ni}{Fe+Ni}$ (atomic ratio) | Sputtering | | $H_c$ (Oe) | Thickness (Å) | $\frac{Co}{Fe+Co}$ (atomic ratio) | Sputtering | | Thickness (Å) | $M_s$ $\left(\frac{emu}{cm^3}\right)$ | $H_k$ (kOe) | $H_{c\perp}$ (Oe) | $D_{50}$ (kfci) | V at 25kfci [$\mu$Vo-p/mm/(m/sec)/turn] |
| | | Power (W) | Time (sec) | | | | Power (W) | Time (sec) | | | | | | |
| Comp.Ex. 4 | —— | —— | —— | —— | —— | 0.6 | 900 | 55 | 1500 | 620 | 5.0 | 530 | 60 | 16 |
| Example 34 | 0.10 | 200 | 40 | 35 | 200 | " | " | " | " | " | " | " | 55 | 55 |
| " 35 | " | " | 110 | 38 | 500 | " | " | " | " | " | " | " | 50 | 58 |
| " 36 | " | " | 220 | 41 | 1000 | " | " | " | " | " | " | " | 42 | 61 |
| " 37 | 0.05 | " | 110 | 15 | 500 | " | " | " | " | " | " | " | 56 | 52 |
| " 38 | 0.20 | " | " | 80 | " | " | " | " | " | " | " | " | 54 | 45 |
| " 39 | 0.25 | " | " | 110 | " | " | " | " | " | " | " | " | 51 | 21 |
| " 40 | 0.1 | " | " | 38 | " | " | " | 20 | 500 | " | " | " | 41 | 40 |
| " 41 | " | " | " | " | " | " | " | 40 | 1000 | " | " | " | 50 | 53 |
| " 42 | " | " | " | " | " | " | " | 80 | 2000 | " | " | " | 48 | 50 |
| " 43 | " | " | " | " | " | " | " | 120 | 3000 | " | " | " | 44 | 47 |
| " 44 | " | " | " | " | " | " | " | 240 | 6000 | " | " | " | 30 | 42 |

16

Table 8

| | Manufacturing conditions of underlayer magnetic film | | | | | | Manufacturing conditions of perpendicular magnetic anisotropic film | | | Magnetic properties | | | | Recording and Reproducing properties | |
|---|---|---|---|---|---|---|---|---|---|---|---|---|---|---|---|
| | Composition | Sputtering | | $M_s$ $\left(\dfrac{emu}{cm^3}\right)$ | $H_c$ (Oe) | Thickness (Å) | Sputtering | | Thickness (Å) | $M_s$ $\left(\dfrac{emu}{cm^3}\right)$ | $H_k$ (kOe) | $H_{c\perp}$ (Oe) | $H_c$ (Oe) | $D_{50}$ (kfci) | V at 25kfci $[\mu$ Vo-p/mm (m/sec)/turn] |
| | | Power (W) | Time (sec) | | | | Power (W) | Time (sec) | | | | | | | |
| Comp.Ex. 5 | —— | —— | —— | —— | —— | —— | 700 | 65 | 1500 | 500 | 3.0 | 900 | 1000 | 41 | 30 |
| Example 45 | Fe | 200 | 40 | 1700 | 7 | 200 | " | " | " | " | " | " | " | 40 | 45 |
| " 46 | " | " | 110 | " | 10 | 500 | " | " | " | " | " | " | " | 40 | 52 |
| " 47 | " | " | 220 | " | 10 | 1000 | " | " | " | " | " | " | " | 39 | 53 |
| " 48 | Fe$_{(0.9)}$ — Ni$_{(0.1)}$ | " | · 40 | 1730 | 35 | 200 | " | " | " | " | " | " | " | 41 | 51 |
| " 49 | " | " | 110 | " | 38 | 500 | " | " | " | " | " | " | " | 42 | 60 |
| " 50 | " | " | 220 | " | 41 | 1000 | " | " | " | " | " | " | " | 41 | 60 |
| " 51 | Fe$_{(0.4)}$ — Co$_{(0.6)}$ | " | 30 | 1680 | 70 | 200 | " | " | " | " | " | " | " | 48 | 55 |
| " 52 | " | " | 70 | " | 85 | 500 | " | " | " | " | " | " | " | 54 | 74 |
| " 53 | " | " | 140 | " | 110 | 1000 | " | " | " | " | " | " | " | 52 | 75 |

EP 0 351 815 A2

## Claims

1. A magnetic recording medium which comprises an underlayer magnetic film deposited on a substrate, said underlayer magnetic film composed of at least one alloy selected from Fe, Fe-Co and Fe-Ni alloys and a perpendicular magnetic anisotropic film deposited on said underlayer magnetic film composed of Fe-Co-O or Co-O.

2. A magnetic recording medium according to claim 1, wherein the underlayer magnetic film has a magnetic anisotropy in a direction parallel to the substrate surface and the coercive force measured parallel to said film surface is 5 to 300 Oe.

3. A magnetic recording medium according to Claim 2, wherein the coercive force measured parallel to the film surface of the underlayer magnetic film is 50 to 250 Oe.

4. A magnetic recording medium according to Claim 1, 2 or 3, wherein the Fe-Co alloy is represented by the formula $Fe_{1-x}Co_x$ ($0.01 \leq x \leq 0.80$).

5. A magnetic recording medium according to Claim 4, wherein the Fe-Co alloy is represented by the formula $Fe_{1-x}Co_x$ ($0.30 \leq x \leq 0.60$).

6. A magnetic recording medium according to Claim 1, 2 or 3, wherein the Fe-Ni alloy is represented by the formula $Fe_{1-x}Ni_x$ ($0.01 \leq x \leq 0.20$).

7. A magnetic recording medium according to any one of Claims 1 through 6, wherein the thickness of the underlayer magnetic film is 50 to 1,000 Å.

8. A magnetic recording medium according to any one of Claims 1 through 7, wherein the thickness of the perpendicular magnetic anisotropic film is 500 to 6,000 Å.

9. A magnetic recording medium according to Claim 8, wherein the thickness of the perpendicular magnetic anisotropic film is 700 to 3,000 Å.

10. A magnetic recording medium according to Claim 1 through 9, wherein the saturation magnetization of the perpendicular magnetic anisotropic film of Fe-Co-O is 300 to 950 $emu/cm^3$.

11. A magnetic recording medium according to Claim 10, wherein the saturation magnetization of the perpendicular magnetic anisotropic film of Fe-Co-O is 500 to 900 $emu/cm^3$.

12. A magnetic recording medium according to any one of Claims 1 through 11, wherein the composition of the underlayer magnetic film of Fe-Co is identical with the composition of Fe-Co in the perpendicular magnetic anisotropic film of Fe-Co-O.

13. A method for manufacturing a perpendicular magnetic recording medium, wherein an underlayer magnetic film composed of any one of Fe, Fe-Co and Fe-Ni alloys is deposited on a substrate, and a perpendicular magnetic anisotropic film composed of Fe-Co-O or Co-O is deposited thereon.

14. A method for manufacturing a perpendicular magnetic recording medium according to Claim 13, wherein the underlayer magnetic film is deposited by sputtering under conditions of -30 to 200°C in substrate temperature, 1 to 10 mTorr in argon gas pressure, and 100 to 2,000Å/min in deposition rate.

15. A method for manufacturing a perpendicular magnetic recording medium according to Claim 13, wherein the perpendicular magnetic anisotropic film is deposited by sputtering under conditions of -30 to 200°C in substrate temperature, 1 to 10 mTorr in argon gas pressure and 100 to 10000 Å/min. in deposition rate under introduction of oxygen.

16. A recording and reproducing method characterized in that a ring head is used for recording and reproducing made of the perpendicular magnetic recording medium according to any one of the Claims 1 through 12.

17. A recording and reproducing method according to Claim 16, wherein the saturation flux density for the ring head is not less than 4,500 Gauss.

18

FIG. 1

EP 0 351 815 A2

FIG. 2

FIG. 3

FIG. 4

FIG. 5